(19) Europäisches Patentamt
European Patent Office
Office européen des brevets

(11) **EP 4 481 344 B1**

(12) **FASCICULE DE BREVET EUROPEEN**

(45) Date de publication et mention
de la délivrance du brevet:
**29.10.2025 Bulletin 2025/44**

(21) Numéro de dépôt: **24181544.8**

(22) Date de dépôt: **11.06.2024**

(51) Classification Internationale des Brevets (IPC):
**G01K 7/01** (2006.01)   **G01K 7/42** (2006.01)
**E06B 9/11** (2006.01)   **E06B 9/68** (2006.01)
**H02S 20/26** (2014.01)   **H02S 40/40** (2014.01)
**E06B 9/24** (2006.01)

(52) Classification Coopérative des Brevets (CPC):
**G01K 7/01; E06B 9/11; E06B 9/68; G01K 7/427; H02S 20/26; H02S 40/40;** E06B 2009/2476;
E06B 2009/6809; E06B 2009/6818;
E06B 2009/6827; G01K 2217/00; Y02E 10/50

(54) **PROCEDE ET SYSTEME DE MESURE DE TEMPERATURE AU MOYEN D'UN MODULE PHOTOVOLTAÏQUE**

VERFAHREN UND SYSTEM ZUR TEMPERATURMESSUNG MITTELS EINES PHOTOVOLTAIKMODULS

METHOD AND SYSTEM FOR MEASURING TEMPERATURE USING A PHOTOVOLTAIC MODULE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.06.2023 FR 2306348**

(43) Date de publication de la demande:
**25.12.2024 Bulletin 2024/52**

(73) Titulaires:
- **Commissariat à l'Energie Atomique et aux Energies Alternatives**
  **75015 Paris (FR)**
- **BHG**
  **68100 Mulhouse (FR)**

(72) Inventeurs:
- **FOUCQUIER, Aurélie**
  **38054 Grenoble Cedex 09 (FR)**
- **CHAINTREUIL, Nicolas**
  **38054 Grenoble Cedex 09 (FR)**

(74) Mandataire: **Cabinet Beaumont**
**4, Place Robert Schuman**
**B.P. 1529**
**38025 Grenoble Cedex 1 (FR)**

(56) Documents cités:
| EP-A- 4 230 980 | EP-B1- 3 974 614 |
| DE-A1- 102013 219 494 | FR-A1- 2 966 942 |
| FR-A1- 2 966 943 | FR-A1- 3 060 634 |
| FR-A1- 3 125 121 | |

- **RUPNIK BRYSON ET AL: "Ambient temperature correction of photovoltaic system performance data", 2014 IEEE 40TH PHOTOVOLTAIC SPECIALIST CONFERENCE (PVSC), IEEE, 8 June 2014 (2014-06-08), pages 1973 - 1977, XP032660033, DOI: 10.1109/PVSC.2014.6925312**
- **HERNANDEZ J ET AL: "Predicting the behavior of a grid-connected photovoltaic system from measurements of solar radiation and ambient temperature", APPLIED ENERGY, ELSEVIER SCIENCE PUBLISHERS, GB, vol. 104, 23 December 2012 (2012-12-23), pages 527 - 537, XP028982580, ISSN: 0306-2619, DOI: 10.1016/ J.APENERGY.2012.10.022**
- **DE SOTO ET AL: "Improvement and validation of a model for photovoltaic array performance", SOLAR ENERGY, ELSEVIER, AMSTERDAM, NL, vol. 80, no. 1, 16 August 2005 (2005-08-16), pages 78 - 88, XP005213130, ISSN: 0038-092X, DOI: 10.1016/J.SOLENER.2005.06.010**

EP 4 481 344 B1

**Description**

Domaine technique

La présente description concerne de façon générale les systèmes intégrant des modules photovoltaïques, et vise plus particulièrement un procédé et un système de mesure de température au moyen d'un module photovoltaïque.

Technique antérieure

De nombreux systèmes comprenant un ou plusieurs modules photovoltaïques configurés pour alimenter une charge, par exemple une batterie électrique, ont été proposés.

Dans de nombreuses situations, il peut être souhaitable de mesurer une température au sein du système, par exemple en vue de commander en conséquence un élément du système.

Pour ce faire, on prévoit de façon classique une sonde de température dédiée à cette mesure.

L'intégration d'une telle sonde au sein du système peut toutefois poser des difficultés.

Le document FR3125121 décrit un exemple de procédé et de système de mesure de température au moyen d'un module photovoltaïque.

Résumé de l'invention

Un mode de réalisation prévoit un procédé de détermination de la température ambiante extérieure Ta dans un système comportant un module photovoltaïque, comprenant les étapes suivantes :

    a) mesurer le courant de court-circuit Isc et la tension de circuit ouvert Voc du module photovoltaïque ;

    b) calculer la température ambiante extérieure Ta, au moyen d'un dispositif électronique de traitement, en fonction de la valeur du courant de court-circuit Isc et de la valeur de la tension de circuit ouvert Voc mesurées à l'étape a), au moyen d'un modèle mathématique unique à deux variables d'entrée, le modèle mathématique comprenant des coefficients fixes, l'un desdits coefficients fixes étant défini par une fonction d'un facteur d'idéalité d'une diode équivalente du module photovoltaïque.

Selon un mode de réalisation, le modèle mathématique est défini par la relation suivante :

[Math 1]

$$T_a(I_{sc}, V_{oc}) = a \times \mathbf{V}_{oc} + b \times \ln(I_{sc}) + c \times \mathbf{I}_{sc} + d + e,$$

où a, b, c, d et e sont les coefficients fixes du modèle, le coefficient e étant défini par une fonction du facteur d'idéalité de la diode équivalente du module photovoltaïque.

Selon un mode de réalisation, le coefficient e est défini par la relation suivante :

[Math 2]

$$e = f \times \mathbf{X2} + g,$$

où f et g sont des coefficients fixes et X2 est le facteur d'idéalité de la diode équivalente du module photovoltaïque.

Selon un mode de réalisation, les coefficients fixes du modèle mathématique sont stockés dans une mémoire du dispositif électronique de traitement.

Selon un mode de réalisation, à l'étape a), la valeur du courant de court-circuit Isc du module photovoltaïque est déterminée par mesure d'une tension aux bornes d'une résistance de shunt connectée aux bornes du module photovoltaïque.

Selon un mode de réalisation, la valeur de la résistance de shunt est telle que la tension aux bornes de la résistance de shunt lors de la mesure du courant de court-circuit Isc du module photovoltaïque est inférieure à 5 % de la tension de circuit ouvert Voc du module photovoltaïque.

Selon un mode de réalisation, le procédé comporte en outre une étape de commande d'un élément commandable électriquement du système en tenant compte de la valeur de la température ambiante Ta calculée à l'étape b).

Un autre mode de réalisation prévoit un système comprenant un module photovoltaïque et un dispositif électronique de traitement configuré pour mettre en oeuvre un procédé tel que défini ci-dessus.

Selon un mode de réalisation, le système comprend un dispositif d'occultation motorisé alimenté par le module photovoltaïque.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en perspective illustrant de façon schématique un exemple d'un système intégrant un module photovoltaïque ;

la figure 2 représente de façon schématique, sous forme de blocs, un exemple d'un système de mesure de température selon un mode de réalisation ; et

la figure 3 représente de façon schématique, sous forme de blocs, un exemple d'un procédé de mesure de température selon un mode de réalisation.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits de contrôle et de traitement adaptés à mettre en oeuvre les procédés décrits n'ont pas été détaillés, la réalisation de tels circuits étant à la portée de la personne du métier à partir des indications de la présente description. En outre, la réalisation des modules photovoltaïques des systèmes décrits n'a pas été détaillée, les modes de réalisation décrits étant compatibles avec tous ou la plupart des modules photovoltaïques connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

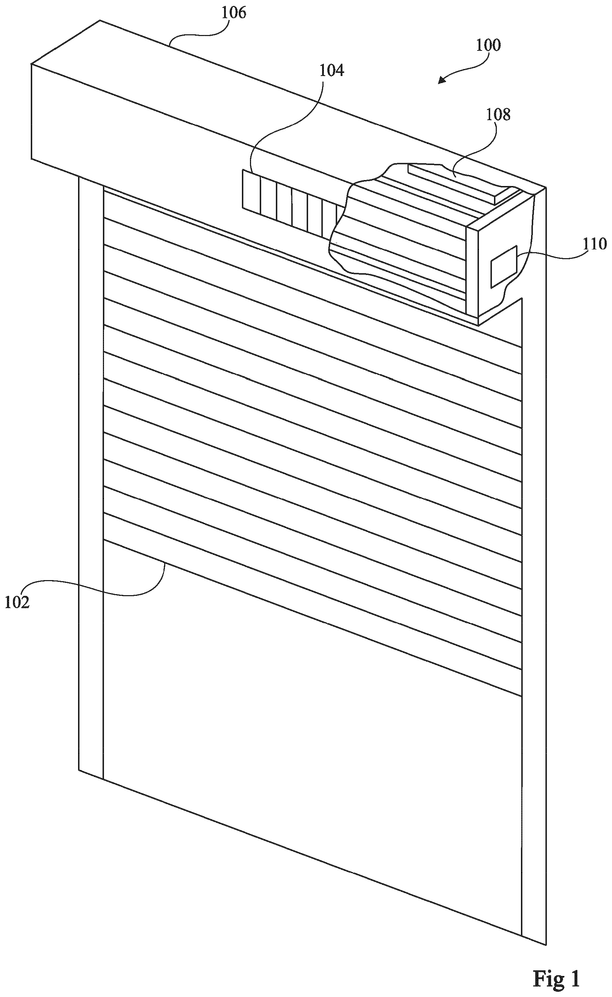

La figure 1 est une vue en perspective illustrant de façon schématique un exemple d'un système 100 intégrant un module photovoltaïque.

Dans cet exemple, le système 100 est un dispositif d'occultation motorisé de type volet roulant.

Le dispositif 100 comporte un tablier 102 constitué par un assemblage de plusieurs lames, et comporte en outre un arbre motorisé (non visible sur la figure 1) sur lequel peut être enroulé le tablier 102 et à partir duquel peut être déroulé le tablier 102.

Le dispositif 100 comporte en outre un générateur photovoltaïque ou module photovoltaïque 104, comportant un ou plusieurs panneaux photovoltaïques. A titre d'exemple, le dispositif 100 comporte un caisson 106 dans lequel est disposé l'arbre motorisé. Le ou les panneaux photovoltaïques du module photovoltaïque 104 sont par exemple disposés sur le caisson 106.

Le dispositif 100 comporte de plus une batterie électrique 108 alimentée en énergie électrique par le module photovoltaïque 104 et alimentant en énergie électrique le dispositif 100, et en particulier le moteur d'entraînement (non visible sur la figure 1) de l'arbre d'enroulement du tablier 102. A titre d'exemple, la batterie 108 est disposée dans le caisson 106.

Le dispositif 100 comporte en outre un dispositif électronique de contrôle 110, permettant notamment de commander le moteur du dispositif. A titre d'exemple, le dispositif de contrôle 110 est disposé à l'intérieur du caisson 106.

Le dispositif électronique de contrôle 110 peut comprendre divers capteurs, ainsi qu'un circuit électronique de traitement des données mesurées par les capteurs. A titre d'exemple, le circuit électronique de traitement comprend une unité de traitement de type microcontrôleur, et peut en outre comprendre un ou plusieurs circuits mémoire.

Le dispositif d'occultation 100 est destiné à être monté devant une ouverture (non visible sur la figure 1) d'un bâtiment, apte à laisser passer la lumière, par exemple devant une fenêtre équipée d'une vitre transparente.

Dans cet exemple, le dispositif électronique de contrôle 110 est configuré pour mettre en oeuvre un procédé de commande automatique dit intelligent du dispositif d'occultation, tenant compte notamment de l'irradiation solaire et de la température extérieure. Un tel procédé permet de gérer les apports solaires dans le bâtiment, par exemple en privilégiant l'ouverture des volets exposés au soleil lorsque les températures extérieures sont basses, et/ou en fermant les volets exposés au soleil lorsque les températures extérieures sont élevées.

L'irradiation solaire peut être estimée par le dispositif électronique de contrôle 110 en mesurant le courant de court-circuit du module photovoltaïque 104.

La température extérieure peut quant à elle être mesurée au moyen d'une sonde de température. La prévision d'une telle sonde induit toutefois un coût supplémentaire. De plus, l'intégration d'une telle sonde dans le dispositif 100 peut présenter des difficultés.

Selon un aspect d'un mode de réalisation, on prévoit d'utiliser le module photovoltaïque 104 pour estimer la température.

Pour cela, le dispositif de contrôle 110 est configuré pour, lors d'une phase de mesure de température, mesurer la tension en circuit ouvert $V_{oc}$ du module photovoltaïque 104, mesurer le courant de court-circuit $I_{sc}$ du module photovoltaïque 104, puis calculer une valeur $T_a$ représentative de la température ambiante au voisinage du module photovoltaïque 104, en fonction de la valeur de la tension en circuit ouvert $V_{oc}$ et de la valeur du courant de court-circuit $I_{sc}$.

Par température ambiante, on entend ici la température de l'air ambiant extérieur, c'est-à-dire de l'air à l'extérieur du module, au voisinage du module, par exemple à une distance de 1 à 30 cm du module, par exemple à une distance de 1 à 10 cm du module.

La demande de brevet français FR2201446, précédemment déposée par le demandeur le 18 février 2022, décrit un procédé d'estimation de la température ambiante $T_a$ au voisinage d'un module photovoltaïque directement à partir d'une mesure de la tension de circuit ouvert $V_{oc}$ et du courant de court-circuit $I_{sc}$ du module, en utilisant pour cela un modèle mathématique polynomial unique à deux variables d'entrée $V_{oc}$ et $I_{sc}$.

Ce procédé permet d'estimer la température ambiante $T_a$ de façon précise, à partir d'une mesure du courant de court-circuit $I_{sc}$ du module et d'une mesure de la tension de circuit ouvert $V_{oc}$ du module, et ce par un calcul simple pouvant aisément être mis en oeuvre par un circuit électronique de contrôle embarqué du système.

Les coefficients fixes du modèle polynomial sont déterminés lors d'une phase de calibration, à la conception du système, par régression polynomiale multiple à partir de données mesurées empiriquement, et stockés dans un circuit mémoire du dispositif électronique de contrôle du système.

Par exemple, lors de la phase de calibration, le système peut être installé dans une chambre de calibration permettant de faire varier la température ambiante $T_a$ et l'irradiation. On vient alors balayer la plage des valeurs de température ambiante $T_a$ auxquelles le module est susceptible d'être soumis en conditions réelles d'utilisation. Pour chaque valeur de température ambiante $T_a$, on fait varier l'irradiation de façon à balayer la plage d'irradiations auxquelles le module est susceptible d'être soumis en conditions réelles d'utilisation. Pour chaque valeur d'irradiation et pour chaque valeur de température ambiante $T_a$, on mesure le courant de court-circuit $I_{sc}$ et la tension de circuit ouvert $V_{oc}$. Les coefficients fixes du modèle sont ensuite déterminés par régression polynomiale multiple à partir des mesures réalisées.

Une limitation de cette solution réside dans la quantité importante de données d'utilisation qu'il est nécessaire d'acquérir lors de la phase de calibration, pour déterminer les coefficients fixes du modèle polynomial.

En outre, un changement de type de module photovoltaïque, par exemple un changement de technologie des cellules photovoltaïques du module, ou un changement de dimensions du panneau photovoltaïque du module, nécessite une recalibration du système, et par conséquent d'acquérir à nouveau un historique complet de données d'utilisation du module pour mettre à jour les coefficients du modèle polynomial.

Ceci rend la solution relativement complexe à implémenter, notamment dans des systèmes dans lesquels le type de module photovoltaïque utilisé est susceptible de changer d'une gamme de produits à une autre voire dans une même gamme de produits.

Selon un aspect d'un mode de réalisation, on prévoit d'estimer la température ambiante $T_a$ au voisinage du module directement à partir d'une mesure de la tension de circuit ouvert $V_{oc}$ et du courant de court-circuit $I_{sc}$ du module, en utilisant pour cela un modèle mathématique unique à deux variables d'entrée $V_{oc}$ et $I_{sc}$, le modèle comportant des coefficients fixes pouvant être déterminés sans données d'utilisation du module ou avec seulement une quantité limitée de données d'utilisation du module.

Selon un aspect d'un mode de réalisation, l'un des coefficients fixes du modèle est défini en fonction d'un facteur d'idéalité d'une diode équivalente du module photovoltaïque, par exemple par une fonction linéaire du facteur d'idéalité de la diode équivalente du module photovoltaïque. Les autres coefficients fixes du modèle sont par exemple indépendants des caractéristiques du module photovoltaïque.

Ceci permet de faciliter considérablement la calibration du modèle, puisqu'il suffit ainsi de connaître le facteur d'idéalité de la diode équivalente du module photovoltaïque pour définir les coefficients fixes du modèle.

Le facteur d'idéalité de la diode équivalente du module photovoltaïque, en électron volt (eV), peut être fourni directement par le fabricant du module photovoltaïque, ou être déterminé par des mesures relativement simples, par exemple à partir de deux mesures de la caractéristique I(V) du module photovoltaïque, à deux niveaux d'irradiation différents. A titre d'exemple, le facteur d'idéalité de la diode équivalente du module photovoltaïque peut être déterminé comme décrit dans l'article intitulé « Improvement and validation of a model for photovoltaic array performance », de W. De Soto et al. (Solar Energy, Vol 80, p78-88, 2006).

A titre d'exemple, le modèle mathématique est défini par l'équation suivante :

[Math 1]

$$T_a(I_{sc}, V_{oc}) = a \times V_{oc} + b \times \ln(I_{sc}) + c \times I_{sc} + d + e \text{,}$$

où a, b, c, d et e sont les coefficients fixes du modèle.

Les coefficients a, b, c, d sont des coefficients indépendants des paramètres physiques du module photovoltaïque. En particulier, les coefficients a, b, c et d sont indépendants des paramètres constructeurs usuels tels que définis dans l'article sumentionné de W. De Soto et al., à savoir :

- le coefficient de température pour le courant de court-circuit, sans unité, ci-après appelé X1 ;
- le facteur d'idéalité de la diode équivalente du module photovoltaïque en conditions de référence (typiquement une irradiation solaire de 1000 W/m$^2$ et une température ambiante de 25°C), en électrons volt, ci-après appelé X2 ;
- le photo-courant en conditions de référence, en ampères, ci-après appelé X3 ;
- le courant de saturation de la diode en conditions de référence, en ampères, ci-après appelé X4 ;
- la résistance de shunt en conditions de référence, en ohms, ci-après appelée X5 ; et
- la résistance série, en ohms, ci-après appelée X6.

Le coefficient fixe e est quant à lui dépendant uniquement du facteur d'idéalité X2 de la diode, et est défini comme étant une fonction linéaire du facteur d'idéalité X2.

Plus particulièrement, le coefficient fixe e est défini par la relation suivante :

[Math 2]

$$e = f \times X2 + g \text{,}$$

où f et g sont des coefficients fixes indépendants des paramètres susmentionnés du module photovoltaïque.

Pour parvenir à un tel modèle mathématique, les inventeurs se sont basés sur le modèle simplifié défini dans l'article susmentionné de De Soto et al., permettant de simuler le comportement d'un module photovoltaïque en toutes conditions de température et d'éclairement, à partir des six paramètres X1, X2, X3, X4, X5, X6 susmentionnés.

Des plages de variation de chacun des paramètres X1, X2, X3, X4, X5 et X6 ont été définies, correspondant respectivement aux plages dans lesquelles chacun des paramètres est susceptible de varier pour une application donnée, en considérant les différents types de modules photovoltaïques compatibles avec l'application. A titre d'exemple non limitatif, pour une application à un volet roulant motorisé à alimentation solaire, les plages suivantes ont été considérées :

pour le paramètre X1 : plage allant de 0.001 à 0.005 ;
pour le paramètre X2 : plage allant de 0.05 à 0.40 eV ;
pour le paramètre X3 : plage allant de 0.4 à 1.2 A ;
pour le paramètre X4 : plage allant de 0.0 à 3.5 nA ;
pour le paramètre X5 : plage allant de 0 à 3000 ohms ;
pour le paramètre X6 : plage allant de 0 à 1 ohm.

Un jeu de N échantillons de modules photovoltaïques à simuler a ensuite été sélectionné dans les plages considérées, selon une distribution statistique définie. Chaque échantillon correspond à un jeu de valeurs des 6 paramètres X1, X2, X3, X4, X5, X6, choisies parmi les plages respectives considérées. Le nombre N d'échantillons est de préférence relativement important, par exemple supérieur à 100, par exemple de l'ordre de 1000.

Pour chacun des N échantillons définis, le modèle de De Soto a été utilisé pour estimer la tension de circuit ouvert $V_{oc}$ et le courant de court-circuit $I_{sc}$ du module photovoltaïque correspondant, dans des conditions variées de température ambiante et d'irradiation solaire.

Ceci a permis de construire, par simulation, une base de données correspondant à un grand nombre de types de modules photovoltaïques différents.

A partir de cette base de données, une régression linéaire mixte a été mise en oeuvre pour prendre en compte la variabilité des échantillons en fonctions des paramètres X1, X2, X3, X4, X5 et X6 susmentionnés.

Ceci a conduit à l'équation Math 1 susmentionnée, où les coefficients a, b, c et d, communs à tous les échantillons de la base de données, caractérisent des effets fixes, et où le coefficient e, spécifique à chaque échantillon de la base de données, caractérise des effets aléatoires.

Une analyse statistique de sensibilité du coefficient e aux paramètres X1, X2, X3, X4, X5, X6 susmentionnés a ensuite montré que le coefficient e pouvait être considéré comme sensiblement indépendant des paramètres X1, X3, X4, X5 et X6, et être approximé par une fonction linéaire du facteur d'idéalité X2 de la diode équivalente du module, telle que définie par l'équation Math 2 ci-dessus.

Pour les plages considérées ci-dessus de variabilité des paramètres X1, X2, X3, X4, X5 et X6, les inventeurs ont obtenu les valeurs suivantes pour les coefficients fixes a, b, c, d, f et g des équations Math 1 et Math 2 ci-dessus :

a compris entre -50 et - 10, par exemple de l'ordre de - 15 ;
b compris entre 1 et 10, par exemple de l'ordre de 3 ;
c compris entre -20 et -5, par exemple de l'ordre de -6 ;
d compris entre 50 et 200, par exemple de l'ordre de 100 ;
f compris entre 200 et 800, par exemple de l'ordre de 250 ;
g compris entre -200 et -20, par exemple de l'ordre de -50.

La personne du métier comprendra que des valeurs différentes des coefficients a, b, c, d, f et g peuvent être obtenues pour des applications différentes et en particulier pour des plages de variabilité différentes des paramètres X1, X2, X3, X4, X5 et X6.

La température ambiante estimée $T_a$ au voisinage du module photovoltaïque 104 peut être calculée par le dispositif de contrôle 110 au moyen du modèle $T_a(I_{sc}, V_{oc})$ défini par l'équation Math 1 ci-dessus.

La tension $V_{oc}$ et le courant $I_{sc}$ peuvent être mesurés respectivement par un capteur de tension et par un capteur de courant du dispositif électronique de contrôle 110. Le dispositif de contrôle 110 peut par ailleurs comprendre des interrupteurs commandables pour mettre le module photovoltaïque en circuit ouvert lors de la mesure de la tension $V_{oc}$ et en court-circuit lors de la mesure du courant $I_{sc}$.

Le courant $I_{sc}$ est par exemple déterminé par mesure d'une tension aux bornes d'une résistance de shunt connectée aux bornes du module photovoltaïque. La résistance de shunt utilisée pour la mesure du courant de court-circuit $I_{sc}$ est de préférence relativement faible de façon à obtenir une mesure précise. A titre d'exemple, la résistance de shunt est telle que la chute de tension aux bornes de la résistance de shunt pendant la mesure du courant $I_{sc}$ ne dépasse pas 5 %, et soit de préférence de l'ordre de 1 % de la valeur de la tension de circuit ouvert $V_{oc}$ du module. Par exemple, pour un module photovoltaïque présentant une tension de circuit ouvert $V_{oc}$ de l'ordre de 7,5 V et un courant de court-circuit $I_{sc}$ de l'ordre de 0,75 A, une résistance de shunt de l'ordre de 0,1 ohms peut être prévue (conduisant à une chute de tension aux bornes de la résistance de shunt de l'ordre de 0,075 V soit 1 % de la tension $V_{oc}$).

Les coefficients fixes a, b, c, d et e du modèle peuvent être stockés dans un circuit mémoire du dispositif électronique de contrôle 110. Le coefficient e est par exemple déterminé lors d'une phase de calibration, à la conception du système, par exemple au moyen d'une chambre de calibration permettant de faire varier de façon contrôlée l'irradiation pour mesurer le facteur d'idéalité de la diode équivalente au module photovoltaïque. A titre de variante, le coefficient e peut être déterminé automatiquement par le circuit électronique de contrôle 110, au moyen de toute méthode connue de détermination du facteur d'idéalité de la diode équivalente d'un module photovoltaïque.

Le procédé décrit ci-dessus permet d'estimer la température ambiante $T_a$ de façon précise, à partir d'une mesure du courant de court-circuit $I_{sc}$ du module et d'une mesure de la tension de circuit ouvert $V_{oc}$ du module, et ce par un calcul simple nécessitant des ressources calculatoires limitées et pouvant aisément être mis en oeuvre par un circuit électronique de contrôle embarqué du système intégrant le module photovoltaïque. On peut ainsi se passer d'une sonde de température extérieure dédiée à cette mesure.

De façon avantageuse, le modèle mathématique mis en oeuvre dans le procédé décrit ci-dessus peut aisément être adapté à différents types de modules photovoltaïques, sans nécessiter une caractérisation complète du module sur toute l'étendue des plages de température ambiante et d'irradiation auxquelles le module est susceptible d'être soumis.

Les modes de réalisation décrits ne se limitent pas à l'application susmentionnée à un système de type volet roulant motorisé. Plus généralement, la solution proposée peut s'appliquer à tout système comprenant un module photovoltaïque, et dans lequel on souhaite pouvoir mesurer la température ambiante au voisinage du module. Par exemple, le module photovoltaïque peut être installé sur un toit d'un bâtiment. La température ambiante $T_a$ au voisinage du module peut par exemple être exploitée par un dispositif électronique de contrôle pour piloter de façon automatique un système de chauffage ou de refroidissement du bâtiment, ou, simplement transmise à l'utilisateur via un dispositif d'affichage électronique, pour information.

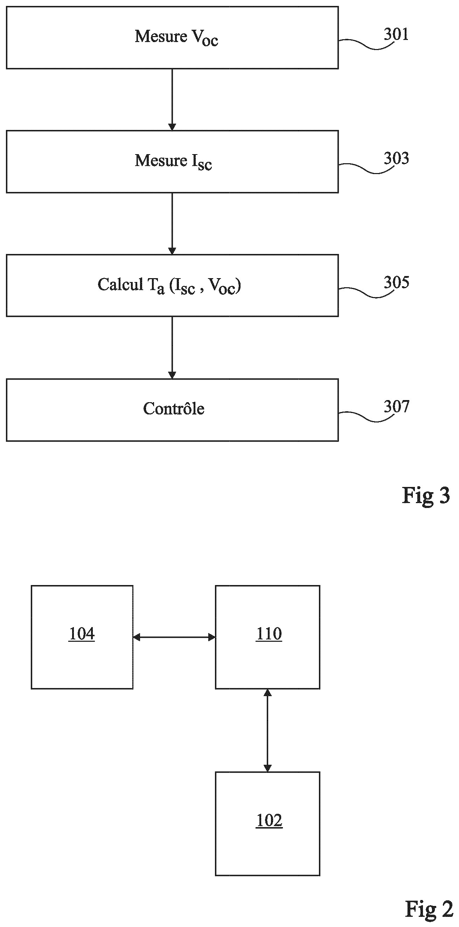

La figure 2 représente de façon schématique, sous forme de blocs, un exemple d'un système 100 de mesure de température selon un mode de réalisation. Le système 100 de la figure 2 peut être un système du type décrit en relation avec la figure 1, ou, plus généralement, tout système intégrant un module photovoltaïque 104. Le système 100 comprend un dispositif électronique de contrôle 110 relié au module photovoltaïque 104 et adapté à mesurer la tension de circuit ouvert $V_{oc}$ et le courant de court-circuit $I_{sc}$ du module. Le dispositif électronique de contrôle 110 est en outre relié à un élément commandable électriquement 102 du système. Le dispositif électronique 110 est configuré pour estimer la température ambiante $T_a$ au voisinage du module photovoltaïque 104 à partir de la tension $V_{oc}$ et du courant $I_{sc}$ en utilisant un modèle mathématique du type décrit ci-dessus, et commander en conséquence l'élément 102.

La figure 3 représente de façon schématique, sous forme de blocs, un exemple d'un procédé de mesure de température selon un mode de réalisation, mis en oeuvre par le dispositif électronique de contrôle 110 dans un système du type décrit en relation avec la figure 2.

Le procédé comprend une étape 301 de mesure de la tension de circuit ouvert $V_{oc}$ du module 104, suivie d'une étape 303 de mesure du courant de court-circuit $I_{sc}$ du module. En pratique, l'ordre des étapes 301 et 303 peut être inversé. De préférence, les étapes 301 de mesure de la tension de circuit ouvert $V_{oc}$ du module 104 et 303 de mesure du courant de court-circuit $I_{sc}$ du module sont mises en oeuvre dans un intervalle de temps rapproché, par exemple à moins d'une minute d'intervalle, afin de conserver des conditions sensiblement identiques de température et d'irradiation lors des deux mesures.

Le procédé comprend en outre, après les étapes 301 et 303, une étape 305 de calcul de la température ambiante $T_a$ au voisinage du module à partir de la tension $V_{oc}$ et du courant $I_{sc}$, au moyen d'un modèle mathématique tel que décrit ci-dessus.

Le procédé comprend en outre, après l'étape 305, une étape 307 de contrôle d'un élément 102 du système en tenant compte de la température $T_a$ calculée à l'étape 305.

Les modes de réalisation décrits ne se limitent pas aux exemples d'applications mentionnés explicitement ci-dessus, mais peuvent être adaptés à tout système intégrant un module photovoltaïque et dans lequel on peut tirer profit d'une mesure de température ambiante au voisinage du module photovoltaïque.

De plus, les modes de réalisation décrits ne se limitent pas à l'exemple particulier décrit ci-dessus dans lequel le calcul de température ambiante est mis en oeuvre par le dispositif électronique de contrôle du module. A titre de variante, le calcul peut être mis en oeuvre par un dispositif électronique de traitement externe distant, par exemple un ordinateur, par exemple lors d'une phase de post-traitement de données passées acquises par le dispositif électronique de contrôle du module.

**Revendications**

1. Procédé de détermination de la température ambiante extérieure $T_a$ dans un système comportant un module photovoltaïque (104), comprenant les étapes suivantes :

    a) mesurer le courant de court-circuit $I_{sc}$ et la tension de circuit ouvert $V_{oc}$ du module photovoltaïque (104) ;
    b) calculer la température ambiante extérieure $T_a$, au moyen d'un dispositif électronique de traitement (110), en fonction de la valeur du courant de court-circuit $I_{sc}$ et de la valeur de la tension de circuit ouvert $V_{oc}$ mesurées à l'étape a), au moyen d'un modèle mathématique unique à deux variables d'entrée, le modèle mathématique comprenant des coefficients fixes, l'un desdits coefficients fixes (e) étant défini en fonction d'un facteur d'idéalité d'une diode équivalente du module photovoltaïque (104), les autres coefficients fixes (a, b, c, d) étant indépendants des paramètres physiques du module photovoltaïque (104).

2. Procédé selon la revendication 1, dans lequel le modèle mathématique est défini par la relation suivante :

[Math 1]

$$T_a(I_{sc}, V_{oc}) = a \times V_{oc} + b \times \ln(I_{sc}) + c \times I_{sc} + d + e \, ,$$

où a, b, c, d et e sont les coefficients fixes du modèle, le coefficient e étant défini par une fonction du facteur d'idéalité de la diode équivalente du module photovoltaïque.

3. Procédé selon la revendication 2, dans lequel le coefficient e est défini par la relation suivante :

[Math 2]

$$e = f \times \text{X2} + g,$$

où f et g sont des coefficients fixes et X2 est le facteur d'idéalité de la diode équivalente du module photovoltaïque.

4. Procédé selon l'une quelconque des revendications 1 à 3, dans lequel les coefficients fixes du modèle mathématique sont stockés dans une mémoire du dispositif électronique de traitement.

5. Procédé selon l'une quelconque des revendications 1 à 4, dans lequel, à l'étape a), la valeur du courant de court-circuit $I_{sc}$ du module photovoltaïque est déterminée par mesure d'une tension aux bornes d'une résistance de shunt connectée aux bornes du module photovoltaïque (104).

6. Procédé selon la revendication 5, dans lequel la valeur de la résistance de shunt est telle que la tension aux bornes de la résistance de shunt lors de la mesure du courant de court-circuit $I_{sc}$ du module photovoltaïque (104) est inférieure à 5 % de la tension de circuit ouvert $V_{oc}$ du module photovoltaïque (104).

7. Procédé selon l'une quelconque des revendications 1 à 6, comportant en outre une étape de commande d'un élément commandable électriquement (102) du système en tenant compte de la valeur de la température ambiante $T_a$ calculée à l'étape b).

8. Système (100) comprenant un module photovoltaïque (104) et un dispositif électronique de traitement (110) configuré pour mettre en oeuvre un procédé selon l'une quelconque des revendications 1 à 7.

9. Système (100) selon la revendication 8, comprenant un dispositif d'occultation motorisé alimenté par le module photovoltaïque (104).

**Patentansprüche**

1. Verfahren zur Bestimmung der Außenumgebungstemperatur $T_a$ in einem System mit einem Photovoltaikmodul (104), das die folgenden Schritte aufweist:

a) Messen des Kurzschlussstroms $I_{sc}$ und der Leerlaufspannung $V_{oc}$ des Photovoltaikmoduls (104);
b) Berechnen der Außenumgebungstemperatur $T_a$ mittels einer elektronischen Verarbeitungsvorrichtung (110) als Funktion des Wertes des Kurzschlussstroms $I_{sc}$ und des Wertes der Leerlaufspannung $V_{oc}$, die in Schritt a) gemessen wurden, mittels eines einzigen mathematischen Modells mit zwei Eingangsgrößen, wobei das mathematische Modell feste Koeffizienten aufweist, wobei einer der festen Koeffizienten (e) durch eine Funktion eines Idealitätsfaktors einer äquivalenten Diode des Photovoltaikmoduls (104) definiert ist und die anderen festen Koeffizienten (a, b, c, d) unabhängig von den physikalischen Parametern des Photovoltaikmoduls (104) sind.

2. Verfahren nach Anspruch 1, wobei das mathematische Modell durch die folgende Beziehung definiert ist:

[Math 1]

$$T_a(I_{sc}, V_{oc}) = a \times V_{oc} + b \times \ln(I_{sc}) + c \times I_{sc} + d + e,$$

wobei a, b, c, d und e die festen Koeffizienten des Modells sind, wobei der Koeffizient e durch eine Funktion des Idealitätsfaktors der äquivalenten Diode des Photovoltaikmoduls definiert ist.

3. Verfahren nach Anspruch 2, wobei der Koeffizient e durch die folgende Beziehung definiert ist:

[Math 2]

$$e = f \times X2 + g,$$

wobei f und g feste Koeffizienten sind und X2 der Idealitätsfaktor der äquivalenten Diode des Photovoltaikmoduls ist.

4. Verfahren nach einem der Ansprüche 1 bis 3, wobei die festen Koeffizienten des mathematischen Modells in einem Speicher der elektronischen Verarbeitungsvorrichtung gespeichert sind.

5. Verfahren nach einem der Ansprüche 1 bis 4, wobei in Schritt a) der Wert des Kurzschlussstroms $I_{sc}$ des Photovoltaikmoduls durch Messen einer Spannung über einem an die Anschlüsse des Photovoltaikmoduls (104) angeschlossenen Shunt-Widerstand bestimmt wird.

6. Verfahren nach Anspruch 5, wobei der Wert des Shunt-Widerstands so gewählt ist, dass die Spannung über dem Shunt-Widerstand bei der Messung des Kurzschlussstroms $I_{sc}$ des Photovoltaikmoduls (104) weniger als 5% der Leerlaufspannung $V_{oc}$ des Photovoltaikmoduls (104) beträgt.

7. Verfahren nach einem der Ansprüche 1 bis 6, das ferner einen Schritt aufweist zum Steuern eines elektrisch steuerbaren Elements (102) des Systems unter Berücksichtigung des in Schritt b) berechneten Wertes der Umgebungstemperatur $T_a$.

8. System (100) mit einem Photovoltaikmodul (104) und einer elektronischen Verarbeitungsvorrichtung (110), die zur Durchführung eines Verfahrens nach einem der Ansprüche 1 bis 7 konfiguriert ist.

9. System (100) nach Anspruch 8, mit einer motorisierten Verdunkelungsvorrichtung, die von dem Photovoltaikmodul (104) gespeist wird.

**Claims**

1. Method for determining the outside ambient temperature $T_a$ in a system including a photovoltaic module (104), comprising the following steps:

a) measuring the short-circuit current $I_{sc}$ and the open-circuit voltage $V_{oc}$ of the photovoltaic module (104);
b) calculating the outside ambient temperature $T_a$, by means of an electronic processing device (110), as a function of the value of the short-circuit current $I_{sc}$ and the value of the open-circuit voltage $V_{oc}$ measured in step a), by means of a single mathematical model having two input variables, the mathematical model comprising fixed coefficients, one of said fixed coefficients (e) being defined by a function of an ideality factor of an equivalent diode of the photovoltaic module (104), the other fixed coefficients (a, b, c, d) being independent from the physical parameters of the photovoltaic module (104).

2. Method according to claim 1, wherein the mathematical model is defined by the following relation:

[Math 1]

$$T_a(I_{sc}, V_{oc}) = a \times V_{oc} + b \times \ln(I_{sc}) + c \times I_{sc} + d + e,$$

where a, b, c, d, and e are the fixed coefficients of the model, the coefficient e being defined by a function of the ideality factor of the equivalent diode of the photovoltaic module.

3. Method according to claim 2, wherein the coefficient e is defined by the following relation:

[Math 2]

$$e = f \times X2 + g,$$

where f and g are fixed coefficients, and X2 is the ideality factor of the equivalent diode of the photovoltaic module.

4. Method according to any one of claims 1 to 3, wherein the fixed coefficients of the mathematical model are stored in a memory of the electronic processing device.

5. Method according to any one of claims 1 to 4, wherein, in step a), the value of the short-circuit current $I_{sc}$ of the photovoltaic module is determined by measuring a voltage across a shunt resistor connected to the terminals of the photovoltaic module (104).

6. Method according to claim 5, wherein the value of the shunt resistor is such that the voltage across the shunt resistor when measuring the short-circuit current $I_{sc}$ of the photovoltaic module (104) is less than 5% of the open-circuit voltage $V_{oc}$ of the photovoltaic module (104).

7. Method according to any one of claims 1 to 6, further including a step for controlling an electrically controllable element (102) of the system taking into account the value of the ambient temperature $T_a$ calculated in step b).

8. System (100) comprising a photovoltaic module (104) and an electronic processing device (110) configured to implement a method according to any one of claims 1 to 7.

9. System (100) according to claim 8, comprising a motorized occultation device powered by the photovoltaic module (104).

Fig 1

Fig 3

Fig 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3125121

- FR 2201446

**Littérature non-brevet citée dans la description**

- **W. DE SOTO et al.** Improvement and validation of a model for photovoltaic array performance. *Solar Energy*, 2006, vol. 80, 78-88